# EUROPÄISCHE PATENTSCHRIFT

(11) **EP 1 586 528 B1**
(45) Veröffentlichungstag und Bekanntmachung des Hinweises auf die Patenterteilung: **31.12.2008**
(21) Anmeldenummer: 04468007.2
(22) Anmeldetag: 16.04.2004
(51) Int. Cl.: B66C 23/80, B60S 9/12

(54) **Stütze**
Supporting leg
Pied de support

(43) Veröffentlichungstag der Anmeldung: 19.10.2005
(73) Patentinhaber: Liv Hidravlika, d.o.o., Postojna, 6230 Postojna (SI)
(72) Erfinder: Gril, Branko, 6258 Prestranek (SI)
(74) Vertreter: Skubic, Vinko

(56) Entgegenhaltungen:
- EP-A- 0 945 318
- WO-A-96/34782
- GB-A- 1 424 651
- US-A- 5 013 011
- DATABASE WPI Section PQ, Week 200004 Derwent Publications Ltd., London, GB; Class Q17, AN 2000-051247 XP002295001 -& RU 2 116 210 C1 (NK URALTERMINALMASH STOCK CO) 27. Juli 1998 (1998-07-27)

## Beschreibung

Die Erfindung betrifft eine Kranstütze zum Unterstützen oder/und zur Schaffung der Stabilität eines an einem Nutzfahrzeug montierten Kranes, während ihrer/seiner Inbetriebsetzung, wobei zum Schwenken der Stütze aus einer Transport- in eine Arbeitsstellung und umgekehrt auf einem Kniegelenk basierende Gelenkmechanismen vorgesehen sind.

Stützen der oben gegebenen Gattung, im gegebenen Fall ausdrücklich Mobilkran-Stützen, sind aus der Patentschrift GB 1 424 651 *(HIAB FOCO AB,* Schweden) bekannt geworden. Die dort offenbarte Stütze setzt sich aus einem äußeren rohrartigen Führungsteil und einem darin geführten säulenartigen Stehteil zusammen. Das Stehteil weist eine Bodenplatte auf und in ihrer Nähe ist ein außerhalb des Führungs- und Stehteiles im wesentlichen parallel dazu verlaufend angeordneter Druckzylinder daran gebunden. Die aus dem Führungs- und Stehteil sowie dem Druckzylinder zusammengesetzte bauliche Einheit ist in Verwendung in senkrechter Ebene um eine waagerechte Achse, die sich an einem waagerecht ausziehbaren Kranträger befindet, aus dem Kran verschwenkbar und kann in zwei Endstellungen, im gegebenen Fall in der senkrechten und einer nach außen verschwenkten Stellung, verriegelt werden. Um die Verschwenkung schaffen zu können, ist zwischen dem genannten waagerecht ausziehbaren Kranträger und dem unteren Endabschnitt des erwähnten Führungsteiles ein Paar Stangen eingegliedert, die ein Kniegelenk bilden. Die Stütze befindet sich beim ganz erstreckten Kniegelenk aus dem Kran hinaus verschwenkt, ihre Stellung wird blockiert und die hydraulische Kolben/Zylinder-Einheit wird auseinandergezogen, während sie beim zusammengeklappten Kniegelenk in den Kran hinein verschwenkt, die Stellung ebenfalls blockiert und die hydraulische Kolben/Zylinder-Einheit ineinandergezogen wird.

Bei der obigen, dem Stand der Technik entnommenen Lösung werden zwei wesentliche Nachteile festgestellt; erstens, bei einer aus einer Teleskopsäule (d.h. aus dem äußeren rohrartigen Führungsteil und dem darin geführten Stehteil) und dem Druckzylinder zusammengesetzten Stützen-Tandemanordnung handelt es sich um eine technisch anspruchsvolle Einrichtung, und zweitens, da der Aktionsbereich der Stütze auf einen scharfen Winkel zwischen der senkrechten und einer schiefen Stellung beschränkt ist, ist die Verwendbarkeit der Stütze stark begrenzt.

Eine Kranstütze gemäß dem Oberbegriff des Anspruchs 1 ist aus RU 2 116 210 C1 bekannt.

Auf Grund des ausgelesenen Standes der Technik ist es nun ein Ziel der Erfindung, die Stützen-Tandemanordnung in der Gruppe von mit dem einleitend angegebenen Anwendungsgebiet definierten Stützen zu vereinfachen, einerseits, und den Aktionsbereich von senkrecht nach unten gerichteter (Arbeits-) bis zur praktisch senkrecht nach oben gerichteten (Transport-) Stellung der Stütze zu vergrößern, andererseits.

Das gesetzte Ziel wird erfindungsgemäß dadurch erreicht, dass ein Lagerzapfen einer waagerechten Krantraverse und ein Augenlager eines Druckzylinders der Stütze eine (erste) Schwenkachse der Stütze gegenüber der Krantraverse herstellen. An einer Frontfläche des besagten Lagerzapfens ist eine Vorsprungscheibe festgesetzt. Zwei ortsfeste Klemmschellen sind an einer Mantelfläche des hydraulischen Zylinders festgesetzt und dazwischen ist eine ortsfeste Führungsstange eingesetzt, worauf ein Schieber aufgesetzt ist. Eine axial geführte Lenkstange ist mit einem ihrer Enden an den Schieber gebunden, während ihr anderes Ende frei ist.

Mit einem Gestänge, dessen Bestandteil ein Kniegelenk ist, ist somit zwischen einer waagerechten Krantraverse und einer schwenkbaren Stütze ein Bewegungsschluß einfach hergestellt.

In den baulichen Einzelheiten ist die erwähnte Vorsprungscheibe mit Bezug auf die Mantelfläche des hydraulischen Zylinders tangential gestellt und weist mit Bezug auf den Zylinder einen zur einen Seite hin weisenden Vorsprung und eine zur anderen Seite hin weisende seitliche Stützfläche auf.

Die betreffende Vorsprungscheibe, bei welcher sich es um ein feststehendes Element handelt, ist dabei ein Schlüsselelement der Kraftübertragung der Stütze auf die Krantraverse sowie der Schwenkung der Stütze.

Zu diesem Zweck ist eine Kurbelstange einenends an den Vorsprung angelenkt, der mit ihr eine (zweite) Schwenkachse der Kurbelstange bildet.

Es versteht sich, dass die genannte Schwenkachse der Kurbelstange parallel zur Achse des erwähnten Lagerzapfens und an einem angemessenen Abstand davon gestellt ist.

Eine Koppelstange ist einenends an die bei der Vorsprungscheibe befindliche Klemmschelle angelenkt, die mit ihr eine (dritte) Schwenkachse der Koppelstange bildet.

Es versteht sich, dass die erwähnten (erste, zweite und dritte) Schwenkachsen in sämtlichen Stellungen gegenseitig nahe liegen. Demgegenüber sind das andere Ende der Kurbelstange und das andere Ende der Koppelstange miteinander gelenkig verbunden, so dass eine (vierte) Schwenkachse vorliegt.

Ein Ende einer Pleuelstange ist an diese gelenkige Verbindung der Kurbel- und Koppelstange angelenkt, so dass die besagte dritte Schwenkachse auch eine erste Schwenkachse der Pleuelstange ist.

Das andere Ende der Pleuelstange ist an den Schieber angelenkt, der mit ihr eine (fünfte) Schwenkachse bildet, die eine zweite Schwenkachse der Pleuelstange ist.

Die technische Durchführbarkeit der Erfindung wird nachstehend mit der Beschreibung eines vorteilhaften, in der beigefügten Zeichnung veranschaulichten informativen Ausführungsbeispieles einer Stütze zur Herstellung der Arbeitsstabilität eines auf einem Nutzfahrzeug montierten Kranes nachgewiesen. Dabei zeigen:
- FIG. 1: einen Aufriss (in Richtung eines Seitenblickes eines hier nicht gezeigten Fahrzeugs) einer erfindungsgemäßen Stütze in senkrecht nach unten gerichteter (Arbeits-) Stellung,

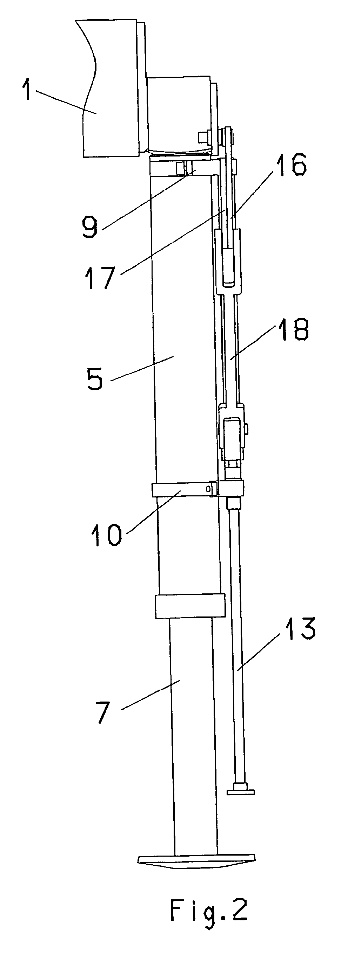

- FIG. 2: einen Seitenriss (in einer Fahrtrichtung des Fahrzeugs) der Stütze der FIG. 1,
- FIG. 3: den Schnitt III-III der FIG. 1, und
- FIG. 4: die Stütze der FIG. 1 in einer praktisch senkrecht nach oben weisenden (Transport-) Stellung.

Eine waagerechte, ortsfeste oder ausziehbare Krantraverse 1 weist erfindungsgemäß einen Lagerzapfen 2 auf.

Ein Druckzylinder 3 der Stütze weist erfindungsgemäß einen mit einem Augenlager 4 versehenen hydraulischen Zylinder 5 und eine mit einem Aufstellfuß 6 versehene Kolbenstange 7 auf.

Der Lagerzapfen 2 und das Augenlager 4 stellen eine Schwenkachse A der Stütze gegenüber der Krantraverse 1 her.

An einer Frontfläche des Lagerzapfens 2 ist eine Vorsprungscheibe 8 (ein ortsfestes Element) festgesetzt, die zwei wesentliche Aufgaben löst; erstens, es handelt sich um eine Sicherung gegen die Lösung des baulichen Lagerzapfen/Augenlager-Paares 2, 4, und zweitens, es handelt sich um eine (nachstehend näher erläuterte) Schlüsselverbindung zwischen der Krantraverse 1 und der schwenkbaren Stütze.

Zwei ortsfeste Klemmschellen 9, 10 sind an einer Mantelfläche des hydraulischen Zylinders 5 festgesetzt: eine erste am Endbereich bei der Vorsprungscheibe 8 und eine zweite am anderen Endbereich der erwähnten Mantelfläche. Eine ortsfeste Führungsstange 11 ist zwischen den Klemmscheiben parallel zur Mantelfläche des hydraulischen Zylinders 5 eingesetzt.

Ein Schieber 12 ist auf die Führungsstange 11 aufgesetzt.

Eine parallel zur Kolbenstange 7 angeordnete, durch die Klemmschelle 10 geführte Lenkstange 13 ist mit einem ihrer Enden an den Schieber 12 gebunden, während ihr anderes Ende frei ist.

Die Vorsprungscheibe 8 ist mit Bezug auf die Mantelfläche des hydraulischen Zylinders 5 tangential gestellt und weist einen mit Bezug auf den Zylinder 5 zur einen Seite hin weisenden Vorsprung 14 und eine zur anderen Seite hin weisende seitliche Stützfläche 15 auf. Bei der dargestellten (vorteilhaften) Ausführungsform handelt es sich um eine Stütze für die paarweisen (links/rechts) Zusammensetzungen; deswegen ist die Vorsprungscheibe 8 an sich für eine linke und eine rechte Stütze einheitlich entworfen (der Vorsprung 14 richtet sich bei einer Stütze in die eine, bei der anderen in die andere Richtung), was dazu führt, dass die Vorsprungscheibe 8 in der veranschaulichten Ausführungsform insgesamt zwei Stützflächen 15 besitzt.

Eine Kurbelstange 16 ist einenends an den Vorsprung 14 angelenkt, der mit ihr eine Schwenkachse B der Kurbelstange 16 bildet.

Eine Koppelstange 17 ist einenends an die Klemmschelle 9 angelenkt, die mit ihr eine Schwenkachse C der Koppelstange 17 bildet.

Das andere Ende der Kurbelstange 16 und das andere Ende der Koppelstange 17 sind miteinander gelenkig verbunden, so dass eine Schwenkachse D vorliegt.

Ein Ende einer Pleuelstange 18 ist an die gelenkige Verbindung der Kurbel- 16 und Koppelstange 17 angelenkt, so dass die Schwenkachse D auch eine erste Schwenkachse der Pleuelstange 18 ist.

Das andere Ende der Pleuelstange 18 ist an den Schieber 12 angelenkt, der mit ihr eine Schwenkachse E bildet, die eine zweite Schwenkachse der Pleuelstange 18 ist.

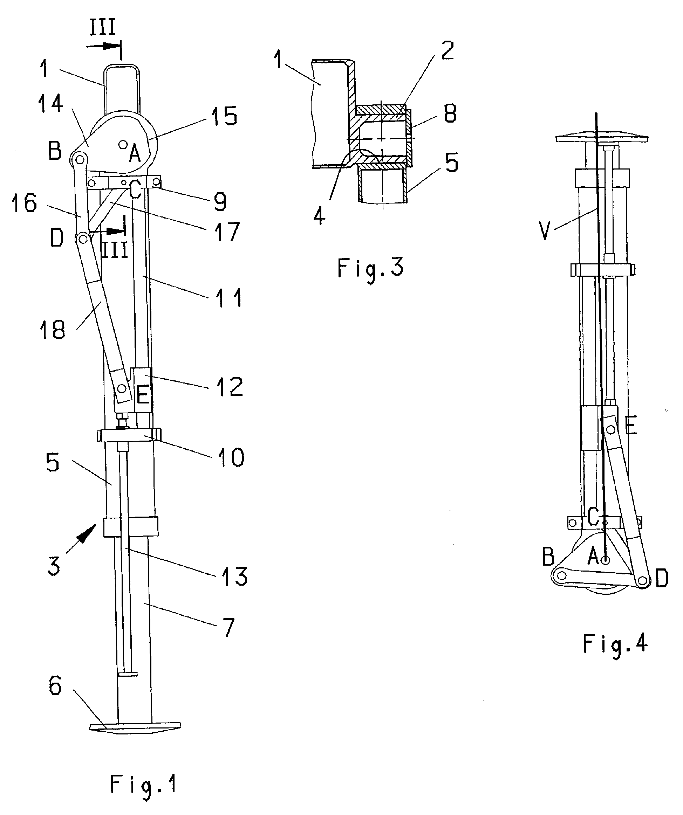

Nachstehend eine Beschreibung der erfindungsgemäßen Stütze, beginnend mit dem Zustand gemäss FIG. 1.

Beim Einziehen der Kolbenstange 7 in den hydraulischen Zylinder 5 hinein verschiebt sich der Aufstellfuß 6 vom Boden herauf und trifft in einem bestimmten (vorab eingestellten) Zeitpunkt auf die Lenkstange 13 auf. Sie verschiebt den Schieber 12 nach oben längs der Führungsstange 11 bis zu einer mit einem (hier nicht gezeigten) hydraulischen Programmgeber eingestellten Grenze.

Da die Schwenkachse B stillsteht, resultiert die Bewegungsfreiheit der durch die Bewegung des Schiebers 12 verursachten Schwenkung der Pleuelstange 18 in Schwenkung des Druckzylinders 3 um die Schwenkachse A - im Einbaufall FIG. 1 - gegen den Uhrzeigersinn. Das zugleich durchgeführte Schwenken um die Schwenkachse A auch der Schwenkachse C resultiert in Schwenken der Schwenkachse D um die Schwenkachse B.

Ein möglicher Zustand (die Stütze wurde nahezu um 180° nach oben verschwenkt) ist in FIG. 4 dargestellt; Vertikale V ist zur anschaulichen Orientierung eingezeichnet. Es ist aus FIG. 4 klar ersichtlich, dass die Pleuelstange 18 in einer oberen Endstellung der Stütze auf die seitliche Stützfläche 15 aufgelegt wird.

Das Herablassen der Stütze beginnt mit Ausziehen der Kolbenstange 7 unter Mitwirkung der Schwerkraft der Stütze. Falls die Schwerkraft allein am Beginn nicht ausreicht, kann ein Abstoß-Federmittel (nicht gezeigt) vorgesehen werden.

Es liegt auf der Hand, dass die Stütze nach oben und nach unten von selbst schwenkt und die Gelenkmechanismen reversibel sind, ohne dass dazu eine zusätzliche Energiequelle erforderlich wäre.

Die aus dem Druckzylinder 3 und der einfachen Lenkstange 13 zusammengesetzte erfindungsgemäße Stützen-Tandemanordnung ist im Vergleich mit dem ausgelesenen Stand der Technik eine technisch anspruchslose Einrichtung, und der fast 180° umfassende Aktionsbereich der Stütze erlaubt im Vergleich mit dem ausgelesenen Stand der Technik eine Erweiterung der Verwendbarkeit der erfindungsgemäßen Stütze praktisch bis zum Optimumextrem.

Ziel der Erfindung ist damit optimal erreicht.

## Patentansprüche

1. Eine Kranstütze zum Unterstützen oder/und zur Schaffung der Stabilität eines an einem Nutzfahrzeug montierten Kranes, während seiner Inbetriebsetzung, wobei zum Schwenken der Stütze aus einer Transport- in eine Arbeitsstellung und umgekehrt auf einem Kniegelenk basierende Gelenkmechanismen vorgesehen sind, **dadurch gekennzeichnet, dass** ein Lagerzapfen (2) einer waagerechten Krantraverse (1) und ein Augenlager (4) eines Druckzylinders (3) der Stütze eine Schwenkachse (A) der Stütze gegenüber der Krantraverse (1) herstellen, dass an einer Frontfläche des Lagerzapfens (2) eine Vorsprungscheibe (8) festgesetzt ist, dass zwei ortsfeste Klemmschellen (9, 10) an einer Mantelfläche des hydraulischen Zylinders (5) festgesetzt sind und dazwischen eine ortsfeste Führungsstange (11) eingesetzt ist, worauf ein Schieber (12) aufgesetzt ist, und dass eine axial geführte Lenkstange (13) mit einem ihrer Enden an den Schieber (12) gebunden ist, während ihr anderes Ende frei ist.

2. Die Stütze nach Anspruch 1, **dadurch gekennzeichnet, dass** die Vorsprungscheibe (8) mit Bezug auf die Mantelfläche des hydraulischen Zylinders (5) tangential gestellt ist und mit Bezug auf den Zylinder (5) einen zur einen Seite hin weisenden Vorsprung (14) und eine zur anderen Seite hin weisende seitliche Stützfläche (15) aufweist.

3. Die Stütze nach Anspruch 2, **dadurch gekennzeichnet, dass** eine Kurbelstange (16) einenends an den Vorsprung (14) angelenkt ist, der mit ihr eine Schwenkachse (B) der Kurbelstange (16) bildet.

4. Die Stütze nach Anspruch 1, **dadurch gekennzeichnet, dass** eine Koppelstange (17) einenends an die Klemmschelle (9) angelenkt ist, die mit ihr eine Schwenkachse (C) der Koppelstange (17) bildet.

5. Die Stütze nach den Ansprüchen 3 und 4, **dadurch gekennzeichnet, dass** das andere Ende der Kurbelstange (16) und das andere Ende der Koppelstange (17) miteinander gelenkig verbunden sind, so dass eine Schwenkachse (D) vorliegt.

6. Die Stütze nach Anspruch 5, **dadurch gekennzeichnet, dass** ein Ende einer Pleuelstange (18) an die gelenkige Verbindung der Kurbel- (16) und Koppelstange (17) angelenkt ist, so dass die Schwenkachse (D) auch eine erste Schwenkachse der Pleuelstange (18) ist.

7. Die Stütze nach Anspruch 6, **dadurch gekennzeichnet, dass** das andere Ende der Pleuelstange (18) an den Schieber (12) angelenkt ist, der mit ihr eine Schwenkachse (E) bildet, die eine zweite Schwenkachse der Pleuelstange (18) ist.

## Claims

1. A crane support intended to support and/or to provide for stability of a crane mounted on a utility vehicle during its operation, wherein joint mechanisms based on a hinged joint are foreseen to pivot the support from a transporting to a working position, and vice versa, **characterised in that** a bearing pivot (2) of a horizontal crane traverse (1) and an eye bearing (4) of a pressure cylinder (3) of the support form a pivot axle (A) of the support with respect to the crane traverse (1), **in that** a disc (8) having a protrusion is fixed on a frontal surface of the bearing pivot (2), **in that** two stationary clamps (9, 10) are fixed on a circumferential surface of a hydraulic cylinder (5) and a stationary guide rod (11) is inserted between them, on the rod of which a slider (12) is put on, and **in that** an axially guided steering rod (13) is linked to a slider (12) with one of its ends, with its other end being free.

2. The support according to claim 1, **characterized in that** the disc (8) having a protrusion is placed tangentially with respect to the circumferential surface of the hydraulic cylinder (5), and has a protrusion (14) pointing to one side, and a lateral supporting surface (15) pointing to the other side with respect to the cylinder (5).

3. The support according to claim 2, **characterized in that** a crank rod (16) is hinged to a protrusion (14) with one of its ends, which forms a pivot axle (B) of the crank rod (16) together with said rod.

4. The support according to claim 1, **characterized in that** a coupling rod (17) is hinged to a clamp (9) with one of its ends, which forms a pivot axle (C) of the coupling rod (17) together with said rod.

5. The support according to claims 3 and 4, **characterized in that** the other end of the crank rod (16) and the other end of the coupling rod (17) are hinged to each other to form pivot axle (D).

6. The support according to claim 5, **characterized in that** one end of a connecting rod (18) is hinged to the hinge connection of the crank rod (16) and the coupling rod (17) so that the pivot axle (D) is also a first pivot axle of the connecting rod (18).

7. The support according to claim 6, **characterized in that** the other end of the connecting rod (18) is hinged to the slider (12), which forms a pivot axle (E) together with said rod, which is a second pivot axle of the connecting rod (18).

## Revendications

1. Pied de support pour grue pour améliorer et/ou assurer la stabilité d'une grue montée sur un véhicule utilitaire, pendant sa mise en service, des mécanismes d'articulation basés sur une articulation de genouillère pour le pivotement du pied de support d'une position de transport dans une position de travail et inversement étant prévus **caractérisé en ce qu'**un tourillon (2) d'une traverse de grue (1) horizontale et un palier circulaire (4) d'un cylindre de pression (3) du pied de support créent un axe de pivotement (A) du pied de support par rapport à la traverse de grue (1), **en ce qu'**un disque saillant (8) est fixé sur une surface frontale du tourillon (2), **en ce que** deux colliers de serrage fixes (9, 10) sont fixés sur une surface d'enveloppe du cylindre hydraulique (5), et une bielle de guidage fixe (11) est insérée entre eux, un coulisseau (12) étant disposé sur la bielle de guidage, et **en ce qu'**une bielle de direction (13) guidée axialement est reliée par l'une de ses extrémités au coulisseau (12), tandis que son autre extrémité est libre.

2. Pied de support selon la revendication 1, **caractérisé en ce que** le disque saillant (8) est situé tangentiellement par rapport à la surface d'enveloppe du cylindre hydraulique (5) et présente, par rapport au cylindre (5), une saillie (14) tournée vers un côté et une surface de support latérale (15) tournée vers l'autre côté.

3. Pied de support selon la revendication 2, **caractérisé en ce qu'**une bielle d'entraînement (16) est articulée à une extrémité à la saillie (14) qui forme avec elle un axe de pivotement (B) de la bielle d'entraînement (16).

4. Pied de support selon la revendication 1, **caractérisé en ce qu'**une bielle d'accouplement (17) est articulée à une extrémité au collier de serrage (9) qui forme avec elle un axe de pivotement (C) pour la bielle d'accouplement (17).

5. Pied de support selon les revendications 3 et 4, **caractérisé en ce que** l'autre extrémité de la bielle d'entraînement (16) et l'autre extrémité de la bielle d'accouplement (17) sont connectées l'une à l'autre de manière articulée, de sorte qu'il se forme un axe de pivotement (D).

6. Pied de support selon la revendication 5, **caractérisé en ce qu'**une extrémité d'une tige de bielle (18) est articulée à la connexion articulée de la bielle d'entraînement (16) et de la bielle d'accouplement (17), de sorte que l'axe de pivotement (D) soit également un premier axe de pivotement de la tige de bielle (18).

7. Pied de support selon la revendication 6, **caractérisé en ce que** l'autre extrémité de la tige de bielle (18) est articulée au coulisseau (12), qui forme avec elle un axe de pivotement (E) qui est un deuxième axe de pivotement de la tige de bielle (18).
